# EUROPÄISCHE PATENTSCHRIFT

(11) **EP 1 261 499 B1**
(45) Veröffentlichungstag und Bekanntmachung des Hinweises auf die Patenterteilung: **15.10.2003**
(21) Anmeldenummer: 01909709.6
(22) Anmeldetag: 31.01.2001
(51) Int. Cl.: B60C 23/04, B60C 23/06

(54) **SYSTEM UND VERFAHREN ZUR ÜBERWACHUNG DES LUFTDRUCKS EINES FAHRZEUGREIFENS**
SYSTEM AND METHOD FOR THE MONITORING OF THE TYRE PRESSURE OF A VEHICLE TYRE
SYSTEME ET PROCEDE DE CONTROLE DE LA PRESSION DE GONFLAGE D'UN PNEU DE VEHICULE

(30) Priorität: 01.03.2000 DE 10009911
(43) Veröffentlichungstag der Anmeldung: 04.12.2002
(73) Patentinhaber: ContiTech Luftfedersysteme GmbH, 30165 Hannover (DE)
(72) Erfinder: RECK, Siegfried, 31582 Neinburg (DE)
(74) Vertreter: Schneider, Egon
(86) Internationale Anmeldenummer: EP0100982
(87) Internationale Veröffentlichungsnummer: WO01064461

(56) Entgegenhaltungen:
- DE-A- 3 709 981

## Beschreibung

Die Erfindung betrifft ein System zur Überwachung des Luftdruckes eines Reifens eines Kraftfahrzeugrades, das folgende Bestandteile enthält:
- ein dem Rad zugeordneter Sensor, der den aufgrund von Schwingungen des Rades erzeugten Schall aufnimmt, und
- eine Auswerteschaltung zur Auswertung der Signale des Mikrofons und zur Abgabe einer Fehlermeldung, wenn der Luftdruck im Reifen des Rades von einem Sollluftdruck abweicht.

Die Erfindung betrifft ferner ein Verfahren zur Überwachung des Luftdruckes eines Fahrzeugreifens.

Aus der DE-PS 37 09 981 ist ein System zu: Ertassung des Luftdruckes eines Fahrzeugreifens gemäß dem Oberbegriff des Anspruchs 1 bekannt, bei dem jedem Reifen des Kraftfahrzeuges ein Sensor in Form eines körperschallmikrofon zugeordnet ist. Jedes Körperschallmikrofon ist in unmittelbarer Nachbarschaft des entsprechenden Rades am Fahrwerk angebracht und erfasst die Vibrationen, die durch den Radlauf auf das Fahrwerk übertragen werden. Das Frequenzspektrum dieser Vibrationen ändert sich, wenn an dem Reifen, der dem entsprechenden Körperschallmikrofon zugeordnet ist, ein Druckanstieg oder ein Druckabfall von einem Solldruck stattfindet. Das aufgenommene Frequenzspektrum wird in einer Auswerteschaltung ausgewertet und es ergeht eine Warnung an den Kraftfahrzeugfahrer, wenn in dem Reifen eine Abweichung von dem Solldruck festgestellt wird.

Mit dem aus der DE-PS 37 09 981 bekannten System kann eine Abweichung des Luftdruckes in einem Fahrzeugreifen von einem Sollluftdruck zuverlässig erfasst werden. Es ist jedoch festzustellen, dass es sich bei den am Fahrwerk befestigten Körperschallmikrofonen um empfindliche Bauteile handelt, die durch Spritzwasser, Steinschlag etc. leicht beschädigt werden können. Im Falle einer Beschädigung eines der Körperschallmikrofone ist die Überwachung des Luftdruckes an dem entsprechenden Reifen des Kraftfahrzeuges nicht mehr möglich.

Der Erfindung liegt die Aufgabe zugrunde, ein System zur Überwachung des Luftdruckes eines Kraftfahrzeugreifens der eingangs genannten Art derart weiterzubilden, dass der dem Reifen zugeordnete Sensor gut vor Umwelteinflüssen geschützt ist. Der Erfindung liegt ferner die Aufgabe zugrunde, ein Verfahren zu schaffen, das die Überwachung des Luftdruckes eines Kraftfahrzeugreifens mit Hilfe des Systems ermöglicht.

Die Aufgabe wird gemäß den kennzeichnenden Merkmalen des Anspruchs 1 dadurch gelöst, dass dem Rad eine Luftfeder mit einem Balg zugeordnet ist, der ein Luftvolumen umschließt, und dass der Sensor innerhalb des umschlossenen Luftvolumens angeordnet ist.

Der mit der Erfindung erzielte Vorteil ist darin zu sehen, dass der in dem Luftvolumen der Luftfeder angeordnete Sensor gut vor Umwelteinflüssen geschützt ist. So ist das Luftvolumen der Luftfeder gegenüber der Umwelt luftund wasserdicht abgeschlossen. Der Sensor kann aus diesem Grunde nicht durch Spritzwasser bzw. durch Steinschlag etc. beschädigt werden.

Gemäß einem ersten Ausführungsbeispiel der Erfindung nach Anspruch 2 ist der Sensor als Mikrofon ausgebildet. Gemäß einem zweiten Ausführungsbeispiel der Erfindung nach Anspruch 3 ist der Sensor als Drucksensor ausgebildet. Der Vorteil dieses Ausführungsbeispiels ist darin zu sehen, dass ein Drucksensor in einer Luftfeder häufig zur Bestimmung des Luftdruckes in der Luftfeder vorhanden ist.

Gemäß Anspruch 4 erfolgt die Überwachung des Luftdruckes eines Kraftfahrzeugreifens mit dem erfindungsgemäßen System in folgenden Verfahrensschritten:
- der Sensor nimmt die Schallschwingungen in dem Luftvolumen, das von dem Balg der Luftfeder umschlossen wird, kontinuierlich auf und übermittelt den Schallschwingungen entsprechende elektrische Signale an eine Auswerteschaltung
- die Auswerteschaltung berechnet aus den übermittelten elektrischen Signalen kontinuierlich die spektrale Zusammensetzung der Schallsignale und bestimmt daraus die Frequenz der Eigenschwingung des Rades,
- die Auswerteschaltung erzeugt ein Fehlersignal, wenn die bestimmte Eigenfrequenz über ein vorgegebenes Maß hinaus von der Eigenfrequenz abweicht, die der mit dem Sollluftdruck versehene Reifen des Rades aufweist.

Die Eigenfrequenz, die der mit einem Sollluftdruck versehene Reifen aufweist, ist zur Durchführung des Verfahrens in der Auswerteschaltung gespeichert. Darüber hinaus ist in der Auswerteschaltung das vorgegebene Maß für die Abweichung gespeichert Dies kann zwischen 1 % und 10 % der Eigenfrequenz liegen, die ein mit dem Sollluftdruck versehener Reifen aufweist. Liegt die Eigenfrequenz also beispielsweise bei ca. 80 Hz, so wird für das vorgegebene Maß ein Wert gespeichert, der zwischen 0,8 Hz und 8 Hz liegt.

Eine Weiterbildung des Verfahrens nach Anspruch 7 ist dadurch gekennzeichnet, dass
- mit dem Drucksensor die Schallschwingungen und der quasistatische Luftdruck in der Luftfeder gleichzeitig gemessen wird und dass
- der Drucksensor an die Auswerteschaltung ein elektrisches Signal übermittelt, das sich aus dem quasistatischen Luftdruck und den diesen überlagernden Schallschwingungen zusammensetzt und dass
- die Auswerteschaltung Mittel enthält, die aus dem übermittelten elektrischen Signal ein den Schallschwingungen entsprechendes elektrisches Signal erzeugen.

Der Vorteil dieser Weiterbildung ist darin zu sehen, dass eine Messung des Luftdruckes in der Luftfeder während der Messung des Luftdruckes in dem der Luftfeder zugeordneten Reifen nicht unterbrochen zu werden braucht. Die Sicherheit der Niveauregeleinrichtung, in die die Luftfeder eingebunden ist, ist somit nicht beeinträchtigt.

Ein Ausführungsbeispiel und weitere Vorteile der Erfindung werden im Zusammenhang mit den nachstehenden Figuren erläutert, darin zeigt:
- Fig. 1: einen Teil eines Kraftfahrzeuges mit einem System zur Überwachung des Luftdruckes eines Kraftfahrzeugreifens,
- Fig. 2: einen Teil eines Kraftfahrzeuges mit einem System zur Überwachung des Luftdruckes eines Kraftfahrzeugreifens,
- Fig. 3: ein Diagramm.

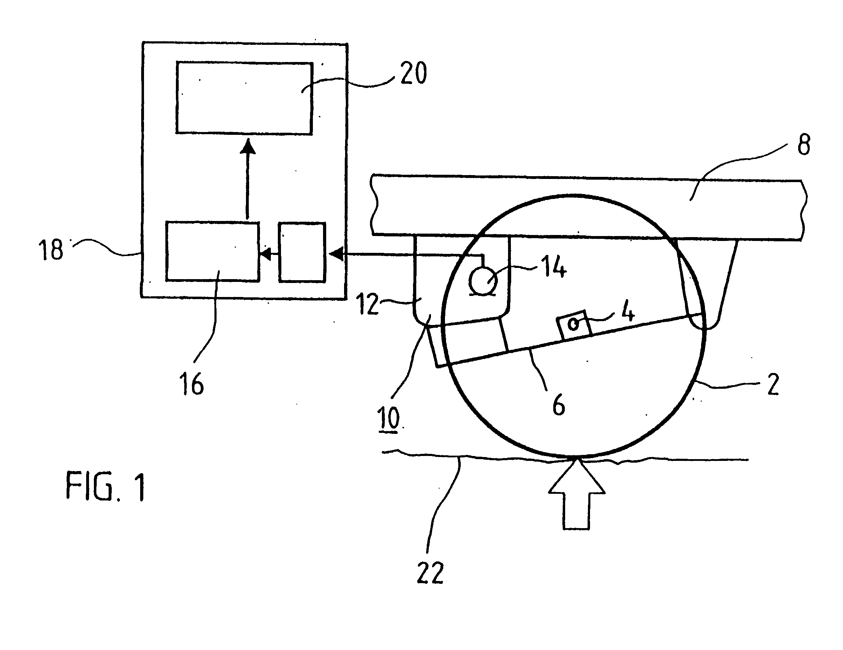

Figur 1 zeigt ein Rad 2 des Kraftfahrzeuges, das an einer Achse 4 befestigt ist und einen Reifen aufweist. Die Achse 4 steht mit einem Längslenker 6 in Verbindung, der an einem Ende des Fahrzeugaufbaus 8 drehbar gelagert ist und an seinem anderen Ende mit einer Luftfeder 10 versehen ist. Mit Hilfe der Luftfeder 10 ist das Rad 2 gegenüber dem Fahrzeugaufbau 8 in an sich bekannter Art und Weise federnd gelagert. Die Luftfeder 10 weist einen Balg 12 auf, der ein Luftvolumen umschließt. Innerhalb dieses Luftvolumens ist ein Sensor 14 in Form eines Mikrofons 14 angeordnet, mit dem die Schallschwingungen innerhalb des Luftvolumens aufgenommen werden. Das Mikrofon 14 übermittelt den Schallschwingungen entsprechende elektrische Signale über einen elektrischen Verstärker 24 an den Analog-Digital-Wandler 16 einer Auswerteschaltung 18. Dort werden die analogen elektrischen Signale in digitale Signale umgewandelt und an den Mikroprozessor 20 der Auswerteschaltung zur Auswertung weitergeleitet.

Während der Fahrt des Kraftfahrzeuges wird das Rad 2 durch die Fahrbahn 22 zu Schwingungen angeregt (angedeutet durch den Pfeil), wobei die Frequenz der Schwingungen in einem breiten Frequenzspektrum liegt. Die Schwingungen des Rades 2 werden als Körperschall über das Fahrwerk, d. h. über die Achse 4 und den Längslenker 6, auf die Luftfeder 10 übertragen. Aufgrund dessen kommt es in dem Luftvolumen, das von dem Balg 12 der Luftfeder 10 umschlossen ist, zu Schallschwingungen, die von dem Mikrofon 14 aufgenommen werden. Die Frequenzen der Schallschwingungen stimmen mit den Frequenzen der Schwingungen des Rades überein.

Die Amplitude der Schwingungen des Rades ist abhängig von der Frequenz, mit der das Rad 2 durch die Fahrbahn 22 zu Schwingungen angeregt wird. Sie ist besonders groß, wenn das Rad 2 durch die Fahrbahn 22 mit einer Frequenz zu Schwingungen angeregt wird, die der Eigenfrequenz des Rades 2 entspricht oder in der Nähe dieser liegt. Das Gleiche gilt für die Schallschwingungen innerhalb des Luftvolumens, das von dem Balg 12 der Luftfeder 10 umschlossen wird. Die Eigenfrequenz des Rades 2 hängt von der Federsteife c und der Masse m des Reifens ab (ωₒ = (c/m) ^{½}). Wenn der Luftdruck im Reifen abnimmt, verringert sich dessen Federsteife c und damit die Eigenfrequenz.

Anhand der elektrischen Signale, die von dem Mikrofon 14 an den Analog-Digital-Wandler 16 übermittelt werden, bzw. anhand der digitalen Daten, die daraus gewonnen werden, erkennt der Mikroprozessor 20 der Auswerteschaltung 18 die Frequenz und die Amplitude der Schwingungen des Rades 2. Aus dem übermittelten Frequenzspektrum ermittelt der Mikroprozessor 20 diejenige Frequenz innerhalb eines definierten Bandes, bei der die maximale Amplitude vorliegt, und legt diese als Eigenfrequenz des Rades 2 fest. Die so ermittelte Eigenfrequenz des Rades 2 wird mit einer in dem Mikroprozessor 20 gespeicherten Eigenfrequenz verglichen, die das Rad 2 aufweist, wenn der Reifen des Rades 2 mit seinem Sollluftdruck befüllt ist. Als Band, innerhalb dessen die Frequenz mit der maximalen Amplitude als Eigenfrequenz bestimmt wird, wird ein Frequenzintervall gewählt, in dem die in dem Mikroprozessor 20 gespeicherte Eigenfrequenz liegt. Darüber hinaus wird das Frequenzintervall so groß gewählt, dass zumindest noch die zulässigen Abweichungen von der gespeicherten Eigenfrequenz deutlich innerhalb des Intervalls liegen. (Beispiel: Ist eine Eigenfrequenz von 70 Hz gespeichert und ist als Maß für die Abweichung eine Frequenz von 10 Hz festgelegt, so wird ein Frequenzintervall von 50 Hz - 90 Hz vorgegeben).

Weicht die ermittelte Eigenfrequenz über ein vorgegebenes Maß hinaus von der gespeicherten Eigenfrequenz ab, so erzeugt der Mikroprozessor ein Fehlersignal, das dem Kraftfahrzeugfahrer anzeigt, dass in dem Reifen des Rades 2 der momentane Luftdruck in unzulässiger Art und Weise von dem Sollluftdruck abweicht.

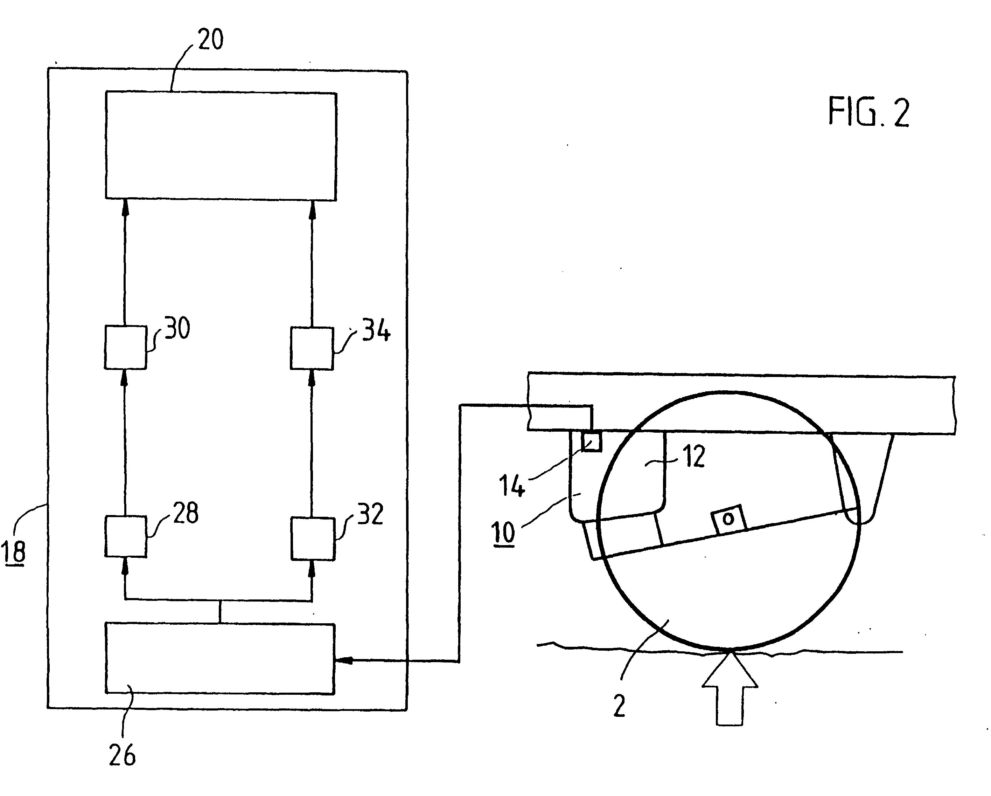

Figur 2 zeigt, genau wie die Figur 1, einen Teil eines Krafttfahrzeuges mit einem System zur Überwachung des Luftdrucks in einem Kraftfahrzeugreifen. Das in der Figur 2 gezeigte System ist weitestgehend genauso aufgebaut wie das in der Figur 1 gezeigte System, ein Unterschied ist lediglich darin zu sehen, dass als Sensor 14 ein Drucksensor 14 verwendet wird. Der Drucksensor 14 misst kontinuierlich den Luftdruck, der in dem Luftvolumen vorliegt, das von dem Balg 12 der Luftfeder 10 umschlossen wird. Der Luftdruck setzt sich zusammen aus einem quasistatischen Druckanteil und einem dynamischen Anteil. Der dynamische Anteil wird in dem Balg 12 durch die Schallschwingungen erzeugt, die in dem von dem Balg 12 umschlossenen Luftvolumen auf Grund der Schwingungen des Rades 2 entstehen (siehe auch Beschreibung zu Figur 1).

Der Drucksensor 14 übermittelt dem aufgenommenen Luftdruck entsprechende elektrische Signale an den elektrischen Vorverstärker 26 der Auswerteschaltung 18. Ausgehend vom Vorverstärker 26 werden die verstärkten elektrischen Signale einerseits über einen Tiefpassfilter 28, der den dynamischen Druckanteil herausfiltert, und einen elektrischen Verstärker 30 zu dem Mikroprozessor 20 der Auswerteschaltung 18 geführt. Zu dem Mikroprozessor 18 gelangt über diesen Weg also der quasistatische Anteil des Drucksignals und kann ausgewertet werden. Aus dem quasistatischen Drucksignal wird in dem Mikroprozessor 18 der quasistatische Luftdruck in dem Balg 12 bestimmt. Ausgehend von dem Vorverstärker 26 werden die vom Drucksensor 14 kommenden elektrischen Signale auch über einen Bandpassfilter 32, der den quasistatischen Druckanteil aus dem elektrischen Signal herausfiltert, und über einen elektrischen Verstärker 34 auf den Mikroprozessor 20 der Auswerteschaltung 18 geführt. Über diesen Weg gelangt zu dem Mikroprozessor 20 also ein dem dynamischen Druckanteil entsprechendes elektrisches Signal. Aus diesem elektrischen Signal erkennt der Mikroprozessor 20 die Frequenz und die Amplitude der Schallschwingungen und damit die Schwingungen des Rades 2. Mit dem übermittelten Frequenzspektrum wird in den Mikroprozessor 20 genauso vorgegangen, wie es bereits im Zusammenhang mit der Figur 1 beschrieben worden ist.

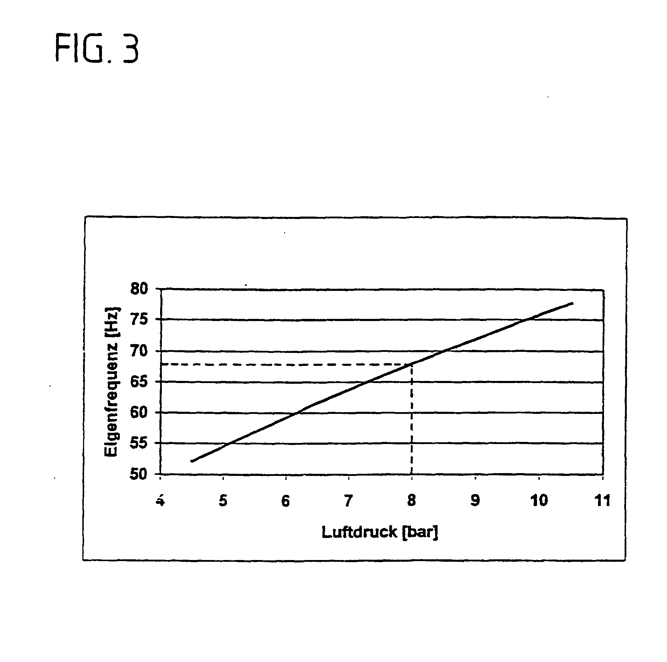

Figur 3 zeigt ein Diagramm, in dem die Eigenfrequenz (hier beispielsweise des Reifens eines Nutzfahrzeugreifens) schematisch über dem Luftdruck innerhalb des Reifens aufgetragen ist. Dem Diagramm ist zu entnehmen, dass mit zunehmendem Luftdruck innerhalb des Reifens auch die Eigenfrequenz des Rades 2 ansteigt. In dem Mikroprozessor 20 der Auswerteschaltung 18 wird eine zu dem Sollluftdruck des Reifens des Rades 2 gehörende Eigenfrequenz gespeichert. Liegt der Sollluftdruck beispielsweise bei 8 bar, so wird als Eigenfrequenz eine Frequenz von 68 Hz gespeichert. Zusätzlich zu der gespeicherten Eigenfrequenz wird in dem Mikroprozessor 20 noch ein Maß gespeichert, um das die tatsächlich bestimmte Eigenfrequenz von der Sollfrequenz abweichen darf. Wird zum Beispiel ein Maß von 7 Hz gespeichert, so darf die tatsächlich bestimmte Eigenfrequenz zwischen 61 Hz und 75 Hz liegen. Liegt die tatsächlich bestimmte Eigenfrequenz außerhalb dieses Intervalls, so erzeugt der Mikroprozessor 20 ein Fehlersignal, das dem Kraftfahrzeugfahrer anzeigt, dass in dem Reifen des Rades 2 der momentane Luftdruck in unzulässiger Art und Weise von dem Sollluftdruck abweicht. Liegt die tatsächliche Eigenfrequenz oberhalb der oberen Grenze des Intervalls, so wird dem Kraftfahrzeugfahrer hierbei angezeigt, dass der Luftdruck in dem Reifen zu hoch ist. Liegt die tatsächliche Eigenfrequenz hingegen unterhalb der unteren Grenze des Intervalls, so wird dem Kraftfahrzeugfahrer angezeigt, dass der Luftdruck in dem Reifen zu niedrig ist.

Wenn das in den Figuren 1 und 2 gezeigte Überwachungssystem genau genug arbeitet, was in erster Linie von der Qualität der Auswerteelektronik abhängig ist, kann dem Kraftfahrzeugfahrer auch der momentane Luftdruck in dem Reifen angezeigt werden, der aus der Kennlinie der Figur 3 bestimmt wird. Eine entsprechende Kennlinie ist in diesem Fall in dem Mikroprozessor 20 der Auswerteschaltung 18 gespeichert.

### Bezugszeichenliste

- 2: Rad
- 4: Achse
- 6: Längslenker
- 8: Fahrzeugaufbau
- 10: Luftfeder
- 12: Balg
- 14: Mikrofon
- 16: Analog-Digital-Wandler
- 18: Auswerteschaltung
- 20: Mikroprozessor
- 22: Fahrbahn
- 24: elektrischer Verstärker
- 26: elektrischer Verstärker
- 28: Tiefpassfilter
- 30: elektrischer Verstärker
- 32: Bandpassfilter
- 34: elektrischer Verstärker

## Patentansprüche

1. System zur Überwachung des Luftdruckes eines Reifens eines Kraftfahrzeugrades (2), das folgende Bestandteile enthält:
- einem dem Rad (2) zugeordneten Sensor (14), der den aufgrund von Schwingungen des Rades (2) erzeugten Schall aufnimmt, und
- eine Auswerteschaltung (18) zur Auswertung der Signale des Sensors (14) und zur Abgabe eine Fehlermeldung, wenn der Luftdruck im Reifen des Rades (2) von einem Sollluftdruck abweicht,
**dadurch gekennzeichnet, dass** dem Rad (2) eine Luftfeder (10) mit einem Balg (12) zugeordnet ist, der ein Luftvolumen umschließt, und **dass** der Sensor (14) innerhalb des umschlossenen Luftvolumens angeordnet ist.

2. System nach Anspruch 1, **dadurch gekennzeichnet, dass** der Sensor (14) als Mikrofon ausgebildet ist.

3. System nach Anspruch 1, **dadurch gekennzeichnet, dass** der Sensor (14) als Drucksensor ausgebildet ist.

4. Verfahren zur Überwachung des Luftdruckes eines Fahrzeugreifens mit einem System nach Anspruch 1 in folgenden Verfahrensschritten:
- der Sensor (14) nimmt die Schallschwingungen in dem Luftvolumen kontinuierlich auf und übermittelt den Schallschwingungen entsprechende elektrische Signale an eine Auswerteschaltung (18),
- die Auswerteschaltung (18) berechnet aus den übermittelten elektrischen Signalen kontinuierlich die spektrale Zusammensetzung der Schallsignale und bestimmt daraus die Frequenz der Eigenschwingung des Rades (2),
- die Auswerteschaltung (18) erzeugt ein Fehlersignal, wenn die bestimmte Eigenfrequenz über ein vorgegebenes Maß hinaus von der Eigenfrequenz abweicht, die der mit einem Sollluftdruck versehene Reifen des Rades (2) aufweist.

5. Verfahren zur Überwachung des Luftdruckes eines Fahrzeugreifens nach Anspruch 4, **dadurch gekennzeichnet, dass** der Sensor (14) als Mikrofon ausgebildet ist.

6. Verfahren zur Überwachung des Luftdruckes eines Fahrzeugreifens nach Anspruch 4, **dadurch gekennzeichnet, dass** der Sensor (14) als Drucksensor ausgebildet ist.

7. Verfahren zur Überwachung des Luftdruckes eines Fahrzeugreifens nach Anspruch 6, **dadurch gekennzeichnet, dass**
- mit dem Drucksensor die Schallschwingungen und der quasistatische Luftdruck in der Luftfeder gleichzeitig gemessen wird und **dass**
- der Drucksensor an die Auswerteschaltung (18) elektrisches Signal übermittelt, das sich aus dem quasistatischen Luftdruck und den diesen überlagernden Schallschwingungen zusammensetzt und **dass**
- die Auswerteschaltung (18) Mittel (32, 34) enthält, die aus dem übermittelten elektrischen Signal ein den Schallschwingungen entsprechendes elektrisches Signal erzeugen.

## Claims

1. System of monitoring the air pressure of a tyre of an automotive vehicle wheel (2), which system includes the following component parts:
- a sensor (14), which is associated with the wheel (2) and receives the noise generated because of the vibrations of the wheel (2), and
- an evaluation circuit (18) for evaluating the signals of the sensor (14) and for issuing an error warning when the air pressure in the tyre of the wheel (2) deviates from a desired air pressure,
**characterised in that** the wheel (2) has associated therewith an air spring (10) provided with a bellows (12) which surrounds an air volume, and **in that** the sensor (14) is disposed internally of the surrounded air volume.

2. System according to claim 1, **characterised in that** the sensor (14) is in the form of a microphone.

3. System according to claim 1, **characterised in that** the sensor (14) is in the form of a pressure sensor.

4. Method of monitoring the air pressure of a vehicle tyre having a system according to claim 1 in the following method steps:
- the sensor (14) continuously receives the noise vibrations in the air volume and transmits electrical signals, corresponding to the noise vibrations, to an evaluation circuit (18),
- the evaluation circuit (18) continuously calculates the spectral composition of the noise signals from the transmitted electrical signals and determines therefrom the frequency of the inherent vibration of the wheel (2), and
- the evaluation circuit (18) generates an error signal when the specific inherent frequency deviates beyond a prescribed parameter from the inherent frequency which the tyre of the wheel (2) has, said tyre being provided with a desired air pressure.

5. Method of monitoring the air pressure of a vehicle tyre according to claim 4, **characterised in that** the sensor (14) is in the form of a microphone.

6. Method of monitoring the air pressure of a vehicle tyre according to claim 4, **characterised in that** the sensor (14) is in the form of a pressure sensor.

7. Method of monitoring the air pressure of a vehicle tyre according to claim 6, **characterised in that**
- the noise vibrations and the quasistatic air pressure in the air spring are simultaneously measured by the pressure sensor, and **in that**
- the pressure sensor transmits to the evaluation circuit (18) an electrical signal which is composed of the quasistatic air pressure and the noise vibrations superimposing said pressure, and **in that**
- the evaluation circuit (18) includes means (32, 34) which generate an electrical signal, corresponding to the noise vibrations, from the transmitted electrical signal.

## Revendications

1. Système pour contrôler la pression de gonflage d'un pneumatique d'une roue (2) de véhicule automobile, qui contient les composants suivants:
- un capteur (4), qui est associé à la roue (2) et qui enregistre le son produit sur la base de vibrations de la roue (2), et
- un circuit d'évaluation (18) servant à évaluer les signaux du capteur (14) et à délivrer une signalisation d'erreur, lorsque la pression de gonflage du pneumatique de la roue (2) diffère d'une pression de gonflage de consigne,
**caractérisé en ce qu'**à la roue (2) est associé un ressort pneumatique (10) comportant un soufflet (12) qui renferme un volume d'air, et que le capteur (14) est disposé à l'intérieur du volume d'air renfermé.

2. Système selon la revendication 1, **caractérisé en ce que** le capteur (14) est agencé sous la forme d'un microphone.

3. Système selon la revendication 1, **caractérisé en ce que** le capteur (14) est agencé sous la forme d'un capteur de pression.

4. Procédé pour contrôler la pression de gonflage d'un pneumatique de véhicule comportant un système selon la revendication 1 et mettant en oeuvre les étapes opératoires suivantes:
- le capteur (14) enregistre continûment les vibrations acoustiques dans le volume d'air et transmet des signaux électriques correspondant aux vibrations acoustiques à un circuit d'évaluation (18),
- le circuit d'évaluation (18) calcule, continûment, à partir des signaux électriques transmis, la composition spectrale des signaux acoustiques et détermine à partir de là la fréquence de la vibration propre de la roue (2),
- le circuit d'évaluation (18) produit un signal d'erreur lorsque la fréquence propre déterminée diffère de plus d'une valeur prédéterminée, de la fréquence propre que présente le pneumatique de la roue (2) pourvu d'une pression de gonflage de consigne.

5. Procédé pour contrôler la pression de gonflage d'un pneumatique de véhicule selon la revendication 4, **caractérisé en ce que** le capteur (14) est agencé sous la forme d'un microphone.

6. Procédé pour contrôler la pression de gonflage d'un pneumatique de véhicule selon la revendication 4, **caractérisé en ce que** le capteur (14) est réalisé sous la forme d'un capteur de pression.

7. Procédé pour contrôler la pression de gonflage dans un pneumatique de véhicule selon la revendication 6,
**caractérisé en ce que**
- à l'aide du capteur de pression, on mesure simultanément les vibrations acoustiques et la pression d'air quasi-statique dans le ressort pneumatique,
- que le capteur de pression transmet au circuit d'évaluation (18) un signal électrique, qui se compose de la pression de gonflage quasi-statique et des vibrations acoustiques superposées à cette pression, et
- que le circuit d'évaluation (18) contient des moyens (32, 34), qui produisent, à partir du signal électrique transmis, un signal électrique correspondant aux vibrations acoustiques.
